# EUROPÄISCHE PATENTANMELDUNG

(11) **EP 4 435 880 A1**
(43) Veröffentlichungstag der Anmeldung: **25.09.2024**
(21) Anmeldenummer: 24159356.5
(22) Anmeldetag: 23.02.2024
(51) Int. Cl.: H01M 4/04, H01M 4/139, B05C 1/08, H01M 10/052

(54) **PROZESSANORDNUNG SOWIE VERFAHREN ZUR FERTIGUNG EINER ELEKTRODE**

(30) Priorität: 21.03.2023 DE 102023202484
(71) Anmelder: VOLKSWAGEN AG, 38440 Wolfsburg (DE)
(72) Erfinder: Bußwinkel, Ludger, 38106 Braunschweig (DE); Schopf, Sven, 38116 Braunschweig (DE); Schmidt-Lobach, Roland, 39356 Hörsingen (DE); Reuber, Sebastian, 01099 Dresden (DE)

(57) **Zusammenfassung**

Die Erfindung betrifft eine Prozessanordnung zur Fertigung einer Elektrode (E) einer Batteriezelle in Trockenherstellung, mit einem Filmbildungs-/Laminierprozess (I), bei dem ein Elektroden-Aktivmaterial in Form eines lösemittelfreien Trockenfilmpulvers (9) als ein Trockenfilm (5) ein- oder beidseitig auf ein Substrat (3) laminierbar ist, und zwar unter Bildung der Elektrode (E). Erfindungsgemäß ist dem Filmbildungs-/Laminierprozess (I) ein Verdichtungsprozess (II) nachgeschaltet, in dem der auf das Substrat (3) laminierte Trockenfilm (5) auf eine Zieldichte verdichtbar ist.

## Beschreibung

Die Erfindung betrifft eine Prozessanordnung zur Fertigung einer Elektrode einer Batteriezelle nach dem Oberbegriff des Anspruches 1 sowie ein Verfahren zur Fertigung einer solchen nach Anspruch 10.

Bei der Fertigung einer Elektrode wird üblicherweise in einer Nassbeschichtung ein mit einem Lösemittel versetztes Elektroden-Aktivmaterial in viskoser Form auf ein Substrat beschichtet. Das mit dem Elektroden-Aktivmaterial beschichtete Substrat wird anschließend in einem Trockenprozess getrocknet, um das Lösemittel aus dem Aktivmaterial zu verdampfen.

In Abkehr von einer solchen Nassbeschichtung wird im gattungsgemäßen Verfahren die Elektrode in Trockenherstellung gefertigt, und zwar mit einem Filmbildungs-/Laminierprozess, bei dem das Elektroden-Aktivmaterial als ein lösemittelfreies Trockenfilmpulver auf das Substrat als Trockenfilm ein- oder beidseitig laminiert wird.

Ein solches Verfahren ist aus der WO 2018/210723 A1 bekannt. Demnach wird zur Durchführung des Filmbildungs-/Laminierprozesses zumindest ein Kalander-Walzenpaar bereitgestellt, dessen Kalanderwalzen über einen Filmbildungs-/Walzenspalt voneinander beabstandet sind. Das Trockenfilmpulver wird in einen Walzenspalt-Einzugsbereich gefüllt. Im Filmbildungs-Walzenspalt wird das Trockenfilmpulver unter Druck, Wärme und Scherung zu einem Trockenfilm kompaktiert. Der Trockenfilm bleibt am Ausgang des Filmbildungs-Walzenspalts als walzengetragender Trockenfilm auf einer der Kalanderwalzen haften. Die den Trockenfilm tragende Kalanderwalze bildet mit einer Gegendruckwalze einen Laminier-Walzenspalt, durch den das Substrat läuft. Im Laminier-Walzenspalt wird der auf der Kalanderwalze haftende Trockenfilm auf das Substrat beschichtet.

Damit der auf dem Substrat beschichtete Trockenfilm eine vordefinierte Zieldichte erreicht, müssen im Stand der Technik die, den Trockenfilm tragende Kalanderwalze sowie die Gegendruckwalze mit ausreichend großem Druck gegeneinander drücken. Es hat sich jedoch gezeigt, dass ein übermäßig großer Walzendruck zu einer Beschädigung des Trockenfilms oder der Stromsammlerfolie/ des Substrats führen kann. Zudem kann nach Durchlauf des Laminier-Walzenspalts im Trockenfilm insbesondere bei hohen Zieldichten ein Springback-Effekt auftreten, bei dem es nach Verlassen des Laminier-Walzenspalts zu einer Rückfederung des auf dem Substrat beschichteten Trockenfilms kommt.

Aus der US 2016/0181651 A1, aus der US 2022/0293952 A1 und aus der DE 10 2021 102 223 A1 sind weitere Verfahren zur Fertigung einer Elektrode in Trockenherstellung bekannt.

Die Aufgabe der Erfindung besteht darin, ein Verfahren sowie eine Prozessanordnung zur Fertigung einer Elektrode einer Batteriezelle in Trockenherstellung bereitzustellen, bei dem im Vergleich zum Stand der Technik in prozesssicherer sowie einfacher Weise eine vordefinierte Zieldichte des auf das Substrat laminierten Trockenfilms erzielbar ist.

Die Aufgabe ist durch die Merkmale des Anspruches 1 oder 10 gelöst. Bevorzugte Weiterbildungen der Erfindung sind in den Unteransprüchen offenbart.

Die Erfindung geht von einer Prozessanordnung zur Fertigung einer Elektrode einer Batteriezelle in Trockenherstellung aus. Die Prozessanordnung weist einen Filmbildungs-/Laminierprozess auf, bei dem ein Elektroden-Aktivmaterial als ein lösemittelfreies Trockenfilmpulver auf ein Substrat als Trockenfilm ein- oder beidseitig laminiert wird, und zwar unter Bildung der Elektrode. Gemäß dem kennzeichnenden Teil des Anspruches 1 ist dem Filmbildungs-/Laminierprozess ein Verdichtungsprozess nachgeschaltet, in dem der auf das Substrat laminierte Trockenfilm bis auf eine Zieldichte verdichtet wird. Erfindungsgemäß erfolgt also nach dem Filmbildungs-/Laminierprozess eine separate Nachverdichtung, so dass auf einen übermäßig hohen Walzendruck im Filmbildungs-/Laminierprozess verzichtet werden kann. Durch die erfindungsgemäß erfolgende zweistufige Verdichtung kann mit hoher Prozessgenauigkeit die vordefinierte Zieldichte im Trockenfilm eingestellt werden.

In einer technischen Umsetzung kann das Substrat in Form einer Endlosbahn dem Filmbildungs-/Laminierprozess zugeführt werden. Entsprechend wird auch die Elektrode im Filmbildungs-/Laminierprozess in Form einer Endlosbahn gebildet. Zur Durchführung des Verdichtungsprozesses kann zumindest ein Verdichter-Walzenpaar bereitgestellt werden, durch dessen Walzenspalt die Elektrode läuft. Die beiden Verdichter-Walzen des Walzenpaars können im Walzenspalt mit einer vordefinierten Druckkraft gegeneinander drücken, um den Trockenfilm bis auf die Zieldicht zu komprimieren.

Der Filmbildungs-/Laminierprozess findet in einer Kalanderanlage statt, durch die das Substrat als Endlosbahn kontinuierlich gefördert wird. Die Kalanderanlage kann ausgangsseitig eine Aufwickeleinheit aufweisen, in der die gebildete Elektrode auf ein Coil gewickelt wird. Das Elektroden-Coil kann zu einer Verdichtungsanlage transferiert werden, in der die Elektrode zunächst in einer Abwickeleinheit abgewickelt und anschließend dem Verdichtungsprozess zugeführt wird.

Im Gegensatz zum obigen Ausführungsbeispiel ist es fertigungstechnisch bevorzugt, wenn der Verdichtungsprozess dem Filmbildungs-/Laminierprozess unmittelbar nachgeschaltet ist. In diesem Fall kann bevorzugt der Verdichtungsprozess unmittelbar in der Kalanderanlage stattfinden, und zwar unter Weglassung einer separaten Verdichtungsanlage, wodurch der fertigungstechnische Aufwand reduzierbar ist. In diesem Fall kann nämlich die im Filmbildungs-/Laminierprozess gebildete Elektrode unterbrechungsfrei, das heißt ohne zusätzlichem Aufwickelvorgang auf ein Coil beziehungsweise Abwickelvorgang von einem Coil, direkt dem Verdichtungsprozess zugeführt werden.

Im Hinblick auf eine einwandfreie Verfestigung des Trockenfilms ist es bevorzugt, wenn der Filmbildungs-/Laminierprozess sowie der Verdichtungsprozess unter Wärmeeinwirkung durchführbar sind. In diesem Fall können beispielhaft die für den Filmbildungs-/Laminierprozess bereitgestellten Kalanderwalzen bis auf eine Prozesstemperatur von zum Beispiel 80°C bis 150°C beheizbar sein. Fertigungstechnisch günstig ist es dabei, wenn die Elektrode nach erfolgtem Filmbildungs-/Laminierprozess noch im Heißzustand dem Verdichtungsprozess zugeführt wird. Auf diese Weise kann der Verdichtungsprozess unter Nutzung der im Filmbildungs-/Laminierprozess aufgenommenen Wärmeenergie der Elektrode durchgeführt werden. Die Bereitstellung einer zusätzlichen Heizeinrichtung im Verdichtungsprozess kann daher vermieden werden.

Zur Durchführung des Filmbildungs-/Laminierprozesses kann zumindest ein Kalander-Walzenpaar bereitgestellt sein, dessen Kalanderwalzen über einen Filmbildungs-Walzenspalt voneinander beabstandet sind. Das Trockenfilmpulver kann in einen Walzenspalt-Einzugsbereich gefüllt und im Filmbildungs-Walzenspalt unter Druck, Wärme und Scherung zum Trockenfilm kompaktiert werden. Dieser wird anschließend auf das Substrat laminiert.

Der Trockenfilm weist aufgrund seiner geringen Schichtdicke nur eine reduzierte mechanische Stabilität auf. Von daher ist es für eine einwandfreie Trockenfilmbildung bevorzugt, wenn der Trockenfilm nicht als freistehender Film aus dem Walzenspalt-Ausgang des Filmbildungs-Walzenspalts gefördert wird, sondern wenn der Trockenfilm am Walzenspalt-Ausgang als walzengetragender Trockenfilm auf einer der Kalanderwalzen haften bleibt. Die den Trockenfilm tragende Kalanderwalze kann zusammen mit einer Gegendruckwalze einen Laminier-Walzenspalt bilden, durch den das Substrat läuft. Im Laminier-Walzenspalt wird der von der Kalanderwalze getragene Trockenfilm auf das Substrat beschichtet.

In einer bevorzugten Ausführungsvariante kann mit Bezug auf die Substrat-Ebene beidseitig spiegelsymmetrisch jeweils ein Kalanderwalzenpaar angeordnet sein. In diesem Fall kann die auf der gegenüberliegenden Substrat-Seite befindlichen Kalanderwalze in Doppelfunktion auch als Gegendruckwalze wirken. Eine separate Bereitstellung einer Gegendruckwalze kann daher vermieden werden.

Im Hinblick auf eine beschädigungsfreie Nachverdichtung des Trockenfilms können die für den Verdichtungsprozess bereitgestellten Verdichter-Walzen durchmessergrößer dimensioniert sein als die für den Filmbildungs-/Laminierprozess bereitgestellten Kalanderwalzen.

Nachfolgend sind Ausführungsbeispiele der Erfindung anhand der beigefügten Figuren beschrieben. Es zeigen:

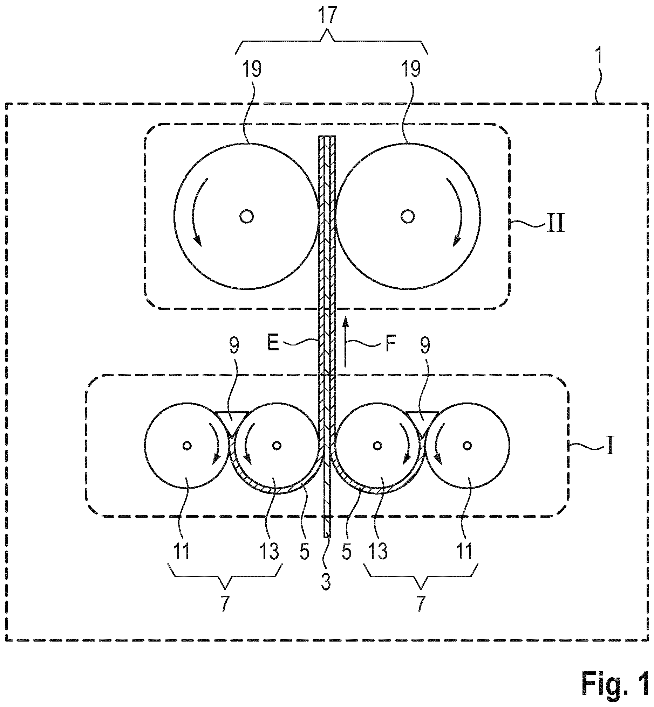

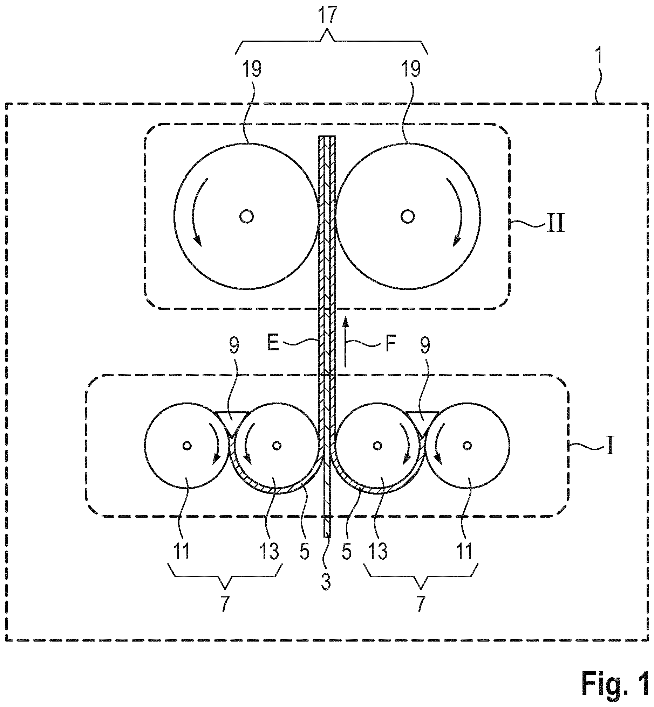

- Figuren 1 bis 3: unterschiedliche Prozessanordnungen zur Fertigung einer Elektrode.

In der Figur 1 ist eine Prozessanordnung gemäß einem ersten Ausführungsbeispiel gezeigt, in der eine Elektrode E in Trockenherstellung in Form einer Endlosbahn gefertigt wird. Die Prozessanordnung weist eine Kalanderanlage 1 auf, durch die in einer Fertigungsrichtung F kontinuierlich ein Substrat 3 in Form einer Endlosbahn unter Bildung der Elektrode E geführt wird. In der Elektrode E ist das Elektroden-Aktivmaterial beidseitig als Trockenfilm 5 mit einer vordefinierten Zieldichte auf dem Substrat 3 laminiert. Die Kalanderanlage 1 führt in einer ersten Prozessstufe einen Filmbildungs-/Laminierprozess I durch, während unmittelbar darauffolgend in einer zweiten Prozessstufe ein Verdichtungsprozess II durchgeführt wird.

Zur Durchführung des Filmbildungs-/Laminierprozesses I weist die Kalanderanlage 1 in der Figur 1 beidseitig des Substrats 3 jeweils ein Kalanderwalzenpaar 7 auf. Die beiden Kalanderwalzenpaare 7 sind mit Bezug auf die Substrat-Ebene spiegelbildlich ausgebildet. In jedem Kalanderwalzenpaar sind die Kalanderwalzen 11, 13 über einen Filmbildungs-Walzenspalt voneinander beabstandet. Der Walzenspalt-Einzugsbereich ist mit einem lösemittelfreien Trockenfilmpulver 9 gefüllt, während sich die beiden Kalanderwalzen 11, 13 zueinander im Gegenuhrzeigersinn drehen, um das Trockenfilmpulver 9 in den Filmbildungs-Walzenspalt einzuziehen. Die substratnahe Kalanderwalze 13 dreht dabei schneller als die vom Substrat 3 abgewandte Kalanderwalze 11, wodurch eine Anhaftung des Trockenfilms 5 an der substratnahen Kalanderwalze 13 unterstützt wird.

Im Filmbildungs-Walzenspalt wird das Trockenfilmpulver 9 unter Druck, Wärme und Scherung zu einem Trockenfilm 15 kompaktiert. Um eine einwandfreie Verfestigung des Trockenfilms 5 zu gewährleisten, sind die beiden Kalanderwalzen 11, 13 beheizbar, beispielhaft bis auf Temperaturen im Bereich von 80°C bis 120°C. Im Hinblick auf weitere Prozessmerkmale des anhand der Figur 1 beschriebenen Filmbildungs-/Laminierprozesses I wird auf die WO 2018/210723 A1 verwiesen, in der der Filmbildungs-/Laminierprozess ausführlich erläutert ist.

Die den Trockenfilm 5 tragende, substratnahe Kalanderwalze 13 bildet in der Figur 1 zusammen mit der, mit Bezug auf die Substrat-Ebene spiegelbildlich gegenüberliegende Kalanderwalze 13 einen Laminier-Walzenspalt, durch den das Substrat 3 läuft. Im Laminier-Walzenspalt wird der von der substratnahen Kalanderwalze 13 getragene Trockenfilm 15 auf das Substrat 3 beschichtet sowie vorverdichtet.

Die im Laminier-Walzenspalt vorverdichtete Elektrode E wird in der Figur 1 noch im Heißzustand dem Verdichtungsprozess II zugeführt, in der eine Nachverdichtung bis auf die Zieldichte erfolgt. Zur Durchführung der Verdichtungsstufe II ist in der Figur 1 ein Walzenpaar 17 bereitgestellt, durch dessen Walzenspalt die Elektrode E läuft. Die beiden Verdichter-Walzen 19 des Walzenpaars 17 drücken mit einer vordefinierten Druckkraft unter Zwischenlage der Elektrode E gegeneinander.

Es ist von besonderer Bedeutung, dass die Elektrode E im Heißzustand direkt zum Verdichtungsprozess II transferiert wird. Dadurch kann der Verdichtungsprozess II unter Nutzung der im Filmbildungs-/Laminierprozess I von der Elektrode E aufgenommenen Wärmeenergie E durchgeführt werden.

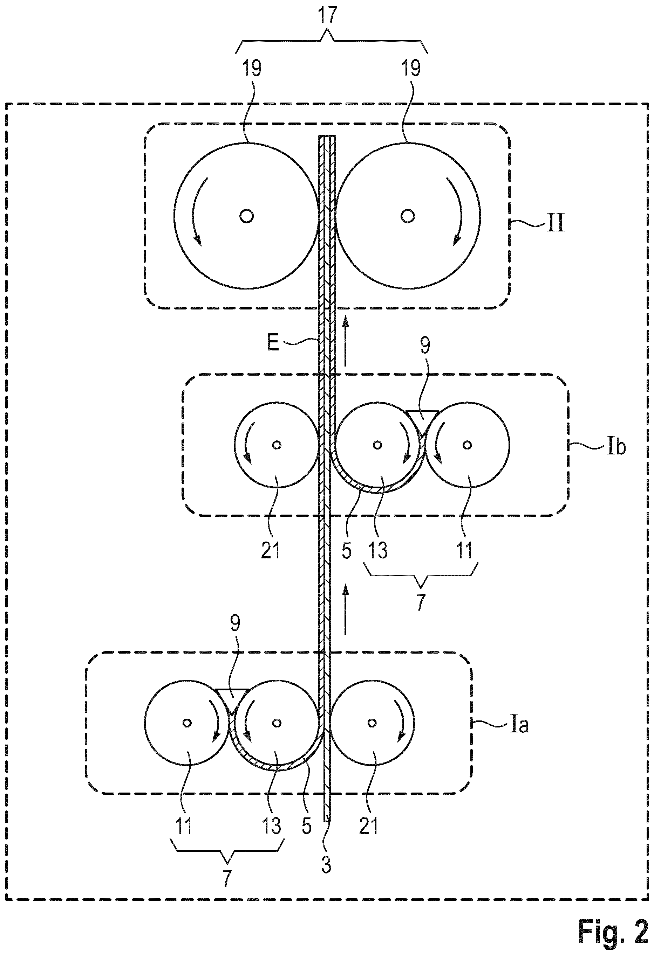

In der Figur 2 ist eine Prozessanordnung gemäß einem zweiten Ausführungsbeispiel gezeigt. Der Aufbau sowie die Wirkungsweise der in der Figur 2 dargestellten Kalanderanordnung entspricht im Wesentlichen dem Aufbau und der Wirkungsweise der in der Figur 1 gezeigten Kalanderanlage 1, so dass auf deren Vorbeschreibung verwiesen wird. Im Unterschied zur Figur 1 sind in der Figur 2 die beidseitig des Substrats 3 angeordneten Kalanderwalzenpaare 7 des Filmbildungs-/Laminierprozesses I nicht spiegelbildlich, sondern vielmehr in Fertigungsrichtung F mit Abstand hintereinander angeordnet. In der Figur 2 wird zunächst die linke Seite des Substrats 3 mit Hilfe des in der Figur 2 links angeordneten Kalanderwalzenpaares 7 mit einem Trockenfilm 5 beschichtet. Hierzu wirkt die, den Trockenfilm 5 tragende Kalanderwalze 13 mit einer auf der gegenüberliegenden (d.h. rechten) Substrat-Seite angeordneten Gegendruckwalze 21 zusammen (d.h. Prozessstufe Ia in der Figur 2). Zwischen der Kalanderwalze 13 und der Gegendruckwalze 21 ist der Laminier-Walzenspalt gebildet. Im weiteren Prozessverlauf wird die rechte Seite des Substrats 3 mit einem weiteren Trockenfilm 5 beschichtet (d.h. Prozessstufe Ib in der Figur 2). Hierzu wirkt die, den weiteren Trockenfilm 5 tragende Kalanderwalze 13 mit einer auf der gegenüberliegenden (d.h. linken) Substrat-Seite angeordneten Gegendruckwalze 21 zusammen, die mit der Kalanderwalze 13 ebenfalls einen Laminierspalt bildet.

Nach Abschluss des Filmbildungs-/Laminierprozesses I wird die beidseitig beschichtete Elektrode E dem Verdichtungsprozess II zugeführt, der identisch wie anhand der Figur 1 beschrieben ausgebildet ist.

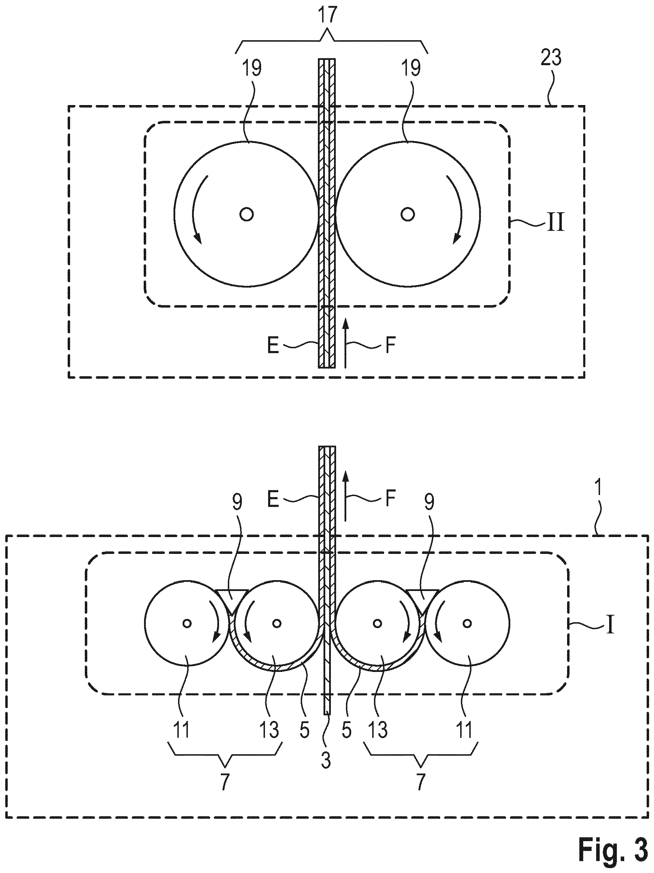

In der Figur 3 ist eine Prozessanordnung gemäß einem dritten Ausführungsbeispiel gezeigt. Deren Aufbau und Funktionsweise entspricht im Wesentlichen dem Aufbau und der Funktionsweise gemäß dem ersten Ausführungsbeispiel. Im Unterschied zur Figur 1 weist in der Figur 3 die Prozessanordnung eine Kalanderanlage 1 und davon separat eine Verdichtungsanlage 23 auf. In der Kalanderanlage 1 erfolgt analog zur Figur 1 ein Filmbildungs-/Laminierprozess I. Nach Abschluss des Filmbildungs-/Laminierprozesses I wird die Elektrode E in einer nicht dargestellten Aufwickeleinheit der Kalanderanlage 1 auf ein Coil aufgewickelt. Das Elektroden-Coil wird anschließend zur Verdichtungsanlage 23 transferiert. In der Verdichtungsanlage 23 wird das Elektroden-Coil in einer Abwickeleinheit abgewickelt und dem Verdichtungsprozess II unterworfen.

In der Figur 3 sind somit der Filmbildungs-/Laminierprozess I und der Verdichtungsprozess II voneinander separaten Anlagen 1, 23 durchführbar. Entsprechend sind jedoch für die Elektroden-Handhabung zusätzliche Anlage-Komponenten, wie etwa Aufwickeleinheiten, Abwickeleinheiten sowie eine zusätzliche Walzen-Heizeinrichtung für die Verdichtungsanlage 23 erforderlich, um die beiden Verdichterwalzen 19 während der Nachverdichtung zu beheizen.

### Bezugszeichenliste

- 1: Kalanderanlage
- 3: Substrat
- 5: Trockenfilm
- 7: Kalanderwalzenpaar
- 9: Trockenfilmpulver
- 11, 13: Kalanderwalzen
- 17: Verdichterwalzenpaar
- 19: Verdichterwalzen
- 21: Gegendruckwalze
- 23: Verdichtungsanlage
- E: Elektrode
- F: Fertigungsrichtung
- I, la, Ib: Filmbildungs-/Laminierprozess
- II: Verdichtungsprozess

## Patentansprüche

1. Prozessanordnung zur Fertigung einer Elektrode (E) einer Batteriezelle in Trockenherstellung, mit einem Filmbildungs-/Laminierprozess (I), bei dem ein Elektroden-Aktivmaterial in Form eines lösemittelfreien Trockenfilmpulvers (9) als ein Trockenfilm (5) ein- oder beidseitig auf ein Substrat (3) laminierbar ist, und zwar unter Bildung der Elektrode (E), **dadurch gekennzeichnet, dass** dem Filmbildungs-/Laminierprozess (I) ein Verdichtungsprozess (II) nachgeschaltet ist, in dem der auf das Substrat (3) laminierte Trockenfilm (5) auf eine Zieldichte verdichtbar ist.

2. Prozessanordnung nach Anspruch 1, **dadurch gekennzeichnet, dass** die Elektrode (E) im Filmbildungs-/Laminierprozess (I) in Form einer Endlosbahn gebildet ist, und/oder dass zur Durchführung des Verdichtungsprozesses (II) zumindest ein Verdichter-Walzenpaar (17) bereitgestellt ist, durch dessen Walzenspalt die Elektrode (E) läuft, und dass insbesondere die beiden Verdichter-Walzen (19) des Walzenpaars (7) im Walzenspalt mit einer vordefinierten Druckkraft gegeneinander drücken.

3. Prozessanordnung nach Anspruch 1 oder 2, **dadurch gekennzeichnet, dass** der Filmbildungs-/Laminierprozess (I) in einer Kalanderanlage (1) stattfindet, und dass insbesondere die Kalanderanlage (1) eine Aufwickeleinheit aufweist, in der die gebildete Elektrode (E) auf ein Coil aufwickelbar ist, und dass das aufgewickelte Elektroden-Coil zu einer Verdichtungsanlage (23) transferierbar ist, in der die Elektrode (E) dem Verdichtungsprozess (II) zuführbar ist.

4. Prozessanordnung nach einem der vorhergehenden Ansprüche, **dadurch gekennzeichnet, dass** der Verdichtungsprozess (II) dem Filmbildungs-/Laminierprozess (I) unmittelbar nachgeschaltet ist, und/oder dass der Verdichtungsprozess (II) unmittelbar in der Kalanderanlage (1) stattfindet, und/oder dass die Elektrode (E) unmittelbar nach dem Filmbildungs-/Laminierprozess (I) unterbrechungsfrei, das heißt insbesondere ohne Aufwickelvorgang auf ein Coil beziehungsweise Abwickelvorgang von einem Coil, direkt dem Verdichtungsprozess (II) zuführbar ist.

5. Prozessanordnung nach einem der vorhergehenden Ansprüche, **dadurch gekennzeichnet, dass** der Filmbildungs-/Laminierprozess (I) und/oder der Verdichtungsprozess (II) unter Wärmeeinwirkung durchführbar ist, und/oder dass insbesondere die Elektrode (E) nach erfolgtem Filmbildungs-/Laminierprozess (I) im Heißzustand dem Verdichtungsprozess (II) zuführbar ist, so dass der Verdichtungsprozess (II) unter Nutzung der im Filmbildungs-/Laminierprozess (I) von der Elektrode (E) aufgenommenen Wärmeenergie durchführbar ist.

6. Prozessanordnung nach einem der vorhergehenden Ansprüche, **dadurch gekennzeichnet, dass** zur Durchführung des Filmbildungs-/Laminierprozesses (I) zumindest ein Kalander-Walzenpaar (7) bereitgestellt ist, dessen Walzen (11, 13) über einen Filmbildungs-Walzenspalt voneinander beabstandet sind, dass das Trockenfilmpulver (9) in einen Einzugsbereich des Filmbildungs-Walzenspalts füllbar ist und im Filmbildungs-Walzenspalt unter Druck, Wärme und Scherung zu dem Trockenfilm (5) kompaktierbar ist, und dass der Trockenfilm (5) auf das Substrat (3) laminierbar ist.

7. Prozessanordnung nach Anspruch 6, **dadurch gekennzeichnet, dass** der Trockenfilm (5) als walzengetragender Trockenfilm auf einer der Kalanderwalzen (13) haften bleibt, dass die den Trockenfilm (15) tragende Kalanderwalze (13) mit einer Gegendruckwalze (21) einen Laminier-Walzenspalt bildet, durch den das Substrat (3) läuft, und dass im Laminier-Walzenspalt der auf der Kalanderwalze (13) haftende Trockenfilm (15) auf das Substrat (3) beschichtbar ist.

8. Prozessanordnung nach Anspruch 7, **dadurch gekennzeichnet, dass** mit Bezug auf die Substrat-Ebene beidseitig jeweils ein Kalanderwalzenpaar (7) angeordnet ist, und dass insbesondere die beiden Kalanderwalzenpaare (7) mit Bezug auf die Substrat-Ebene spiegelsymmetrisch angeordnet sind, so dass die auf der gegenüberliegenden Substrat-Seite befindlichen Kalanderwalze (13) in Doppelfunktion als Gegendruckwalze wirkt.

9. Prozessanordnung nach einem der Ansprüche 2 bis 8, **dadurch gekennzeichnet, dass** die für den Verdichtungsprozess (II) bereitgestellten Walzen (19) durchmessergrößer dimensioniert sind als die für den Filmbildungs-/Laminierprozess (I) bereitgestellten Kalanderwalzen (11, 13).

10. Verfahren zur Fertigung einer Elektrode (E) einer Batteriezelle in Trockenherstellung in einer Prozessanordnung nach einem der vorhergehenden Ansprüche, mit einem Filmbildungs-/Laminierprozess (I), bei dem ein Elektroden-Aktivmaterial in Form eines lösemittelfreien Trockenfilmpulvers (9) als ein Trockenfilm (5) ein- oder beidseitig auf ein Substrat (3) laminiert wird, und zwar unter Bildung der Elektrode (E), **dadurch gekennzeichnet, dass** dem Filmbildungs-/Laminierprozess (I) ein Verdichtungsprozess (II) nachgeschaltet ist, in dem der auf das Substrat (3) laminierte Trockenfilm (5) auf eine Zieldichte verdichtet wird.
